# EUROPÄISCHE PATENTSCHRIFT

(11) **EP 3 339 686 B1**
(45) Veröffentlichungstag und Bekanntmachung des Hinweises auf die Patenterteilung: **22.04.2020**
(21) Anmeldenummer: 17200352.7
(22) Anmeldetag: 07.11.2017
(51) Int. Cl.: F16H 57/023, F16H 57/08

(54) **PLANETENRADTRÄGER FÜR EIN UMLAUFRÄDERGETRIEBE, SET ZUR HERSTELLUNG EINES UMLAUFRÄDERGETRIEBES SOWIE UMLAUFRÄDERGETRIEBE MIT EINEM SOLCHEN PLANETENRADTRÄGER**
PLANETARY GEAR CARRIER FOR EPICYCLIC GEAR, SET FOR THE PREPARATION OF A EPICYCLIC GEAR AND EPICYCLIC GEAR WITH SUCH A PLANETARY GEAR CARRIER
SUPPORT D'ENGRENAGE PLANÉTAIRE POUR UN TRAIN D'ENGRENAGE PLANÉTAIRE, ENSEMBLE DE FABRICATION D'UN TRAIN D'ENGRENAGE PLANÉTAIRE AINSI QUE TRAIN D'ENGRENAGE PLANÉTAIRE DOTÉ D'UN TEL SUPPORT D'ENGRENAGE PLANÉTAIRE

(30) Priorität: 22.12.2016 DE 102016125376
(43) Veröffentlichungstag der Anmeldung: 27.06.2018
(73) Patentinhaber: Bühler Motor GmbH, 90459 Nürnberg (DE)
(72) Erfinder: Kirchgeßner, Daniel, 97222 Rimpar (DE); Gundermann, Martin, 90402 Nürnberg (DE); Hofmann, Gerhard, 90613 Großhabersdorf (DE)

(56) Entgegenhaltungen:
- EP-A1- 2 735 767
- DE-A1-102013 219 634
- DE-B- 1 193 377

## Beschreibung

Die Erfindung betrifft einen Planetenradträger für ein Umlaufrädergetriebe nach dem Oberbegriff des Patentanspruchs 1. Ferner betrifft die Erfindung ein Set zur Herstellung eines solchen Umlaufrädergetriebes sowie ein Umlaufrädergetriebe mit einem Planetenradträger. Ein Planetenradträger der eingangs genannten Art ist beispielsweise aus der DE 10 2013 219 634 A1 bekannt.

Aus der Praxis sind Planetenradträger für Umlaufrädergetriebe bekannt, die mehrere Lagerzapfen aufweisen, wobei die Lagerzapfen unterschiedliche Planetenräder aufnehmen können. Insbesondere können derartige Planetenradträger mit verschiedenen Planetenradsätzen kombiniert werden, um unterschiedliche Getriebeuntersetzungen einzustellen. Die entsprechenden Planetenräder weisen dazu unterschiedliche Außendurchmesser bzw. eine unterschiedliche Zähnezahl auf.

Es hat sich in der Praxis als problematisch gezeigt, dass die Zuordnung der Planetenräder zu den jeweiligen Lagerzapfen des Planetenradträgers nicht immer eindeutig ist. Insofern besteht ein Risiko, dass die gewünschte Getriebeuntersetzung fehlerhaft eingestellt wird. Um dies zu vermeiden, ist es bekannt, die Lagerzapfen mit unterschiedlichen Durchmessern vorzusehen. Das hat zur Folge, dass ein Planetenradträger, mit welchem zwei unterschiedliche Getriebeuntersetzungen realisiert werden sollen, die doppelte Anzahl von Lagerzapfen aufzuweisen hat. Das führt zu dem weiteren Problem, dass der Außendurchmesser der einzelnen Planetenräder und somit die gewünschte Getriebeuntersetzung durch den Abstand zwischen den Lagerzapfen begrenzt ist. Insbesondere ist der Außendurchmesser der Planetenräder limitiert, da die Planetenräder sonst mit benachbarten Lagerzapfen kollidieren würden.

Aus der nächstliegenden DE 10 2013 219 634 A1 ist ein Planetenradträger bekannt, der eine Wange aufweist, in welcher auf zwei verschiedenen Kreislinien mehrere Bohrungen angeordnet sind. Die Bohrungen nehmen Planetenachsen auf, die durch Verschrauben mit dem Planetenradträger verbunden werden können. Durch die unterschiedlichen Kreisradien, auf welchen sich die Bohrungen befinden, können verschiedene Übersetzungen mit denselben Bauteilen realisiert werden.

Der Erfindung liegt demgegenüber die Aufgabe zu Grunde, einen Planetenradträger für ein Umlaufrädergetriebe anzugeben, der universell für Umlaufrädergetriebe mit unterschiedlichen Getriebeuntersetzungen einsetzbar ist und eine prozesssichere Montage ermöglicht. Ferner ist es Aufgabe der Erfindung, ein Set zur Herstellung eines solchen Umlaufrädergetriebes sowie ein Umlaufrädergetriebe mit einem solchen Planetenradträger anzugeben.

Erfindungsgemäß wird diese Aufgabe im Hinblick auf den Planetenradträger durch den Gegenstand des Patentanspruchs 1, im Hinblick auf das Set durch den Gegenstand des Patentanspruchs 9 und im Hinblick auf das Umlaufrädergetriebe durch den Gegenstand des Patentanspruchs 12 gelöst.

Die Erfindung beruht demnach auf dem Gedanken, einen Planetenradträger für ein Umlaufrädergetriebe anzugeben, wobei der Planetenradträger wenigstens eine Trägerscheibe, zwei Lagerzapfen und wenigstens zwei Lagerbohrungen aufweist. Die Lagerzapfen sind mit jeweils einem ersten Planetenrad zur Bildung einer ersten Getriebeuntersetzung kombinierbar. Die Lagerbohrungen sind ebenfalls mit jeweils einem zweiten Planetenrad zur Bildung einer zweiten Getriebeuntersetzung kombinierbar. Erfindungsgemäß sind die Lagerzapfen mit der Trägerscheibe einstückig ausgebildet.

Die Erfindung fußt auf dem Grundgedanken, eine Verwechslung von Planetenrädern für unterschiedliche Getriebeuntersetzungen zu vermeiden, indem ein gegenüber dem Stand der Technik alternatives mechanisches Konzept eingesetzt wird. Anstelle mehrerer Lagerzapfen, die die Planetenräder mit unterschiedlichen Getriebeuntersetzungen aufnehmen, sind vielmehr am Planetenradträger Lagerzapfen einerseits und Lagerbohrungen andererseits vorgesehen. Das hat den Vorteil, dass eine klare Zuordnung der ersten Planetenräder und der zweiten Planetenräder zu dem Planetenradträger möglich ist. Insbesondere werden Montagefehler vermieden, so dass insgesamt die Prozesssicherheit bei der Montage erhöht wird. Die Verwendung von Lagerbohrungen hat außerdem den Vorteil, dass die ersten Planetenräder im Vergleich zum Stand der Technik größer gewählt werden können, da keine zusätzliche Lagerzapfen, die eine Rotation der ersten Planetenräder blockieren könnten, vorliegen. Stattdessen sind Lagerbohrungen vorgesehen, die von den ersten Planetenrädern, die sich auf den Lagerzapfen befinden, überragt werden können. Die Größe der ersten Planetenräder ist insofern nicht durch zusätzliche Lagerzapfen begrenzt.

Bei einer bevorzugten Ausführungsform des erfindungsgemäßen Planetenradträgers ist vorgesehen, dass die Lagerzapfen und die Lagerbohrungen auf derselben Seite einer Trägerscheibe angeordnet sind. Der Planetenradträger lässt sich auf diese Weise gut im Rahmen eines Baukastensystems einsetzen, da die unterschiedlichen Getriebeuntersetzungen jeweils auf derselben Seite der Trägerscheibe realisierbar sind. Insgesamt können so im Wesentlichen einheitlich aufgebaute Umlaufrädergetriebe mit unterschiedlichen Getriebeuntersetzungen bzw. in unterschiedlichen Skalierungsstufen, einfach und kostengünstig hergestellt werden.

Vorzugsweise sind in Umfangsrichtung des Planetenradträgers, insbesondere in Umfangsrichtung der Trägerscheibe, jeweils abwechselnd ein Lagerzapfen und eine Lagerbohrung vorgesehen. So kann der auf dem Planetenradträger zur Verfügung stehende Raum bestmöglich genutzt werden. Damit ist sichergestellt, dass der Planetenradträger insgesamt eine kompakte Form aufweist, so dass sich besonders kompakte Umlaufrädergetriebe realisieren lassen.

Bei einer weiteren bevorzugten Ausführungsform der Erfindung ist vorteilhaft vorgesehen, dass die Lagerzapfen auf einer ersten Kreislinie und die Lagerbohrungen auf einer zweiten Kreislinie angeordnet sind. Die erste Kreislinie und die zweite Kreislinie können unterschiedliche Kreisdurchmesser aufweisen.

Die Anordnung der Lagerzapfen und Lagerbohrungen auf unterschiedlichen Kreislinien, mithin die versetzte Anordnung von Lagerzapfen und Lagerbohrungen, verbessert weiter den Baukastencharakter der Erfindung. Indem die Lagerbohrungen und Lagerzapfen in radialer Richtung bezogen auf den Planetenradträger versetzt zueinander angeordnet sind, ist sichergestellt, dass bei unterschiedlichen Planetenraddurchmessern der Durchmesser eines Hohlrads, in welches die Planetenräder eingreifen, konstant gehalten werden kann. Das Umlaufrädergetriebe kann also ein einheitliches Hohlrad mit einem konstanten Innendurchmesser aufweisen, wobei sowohl die ersten Planetenräder, als auch die zweiten Planetenräder bei Anordnung auf dem Planetenradträger in das Hohlrad eingreifen können. So können unterschiedliche Getriebeuntersetzungen mit weitgehend übereinstimmenden Bauteilen des Umlaufrädergetriebes realisiert werden. Das reduziert die Produktionskosten.

In einer bevorzugten Variante der Erfindung ist vorgesehen, dass die Lagerbohrungen des Planetenradträgers als Sacklochbohrungen ausgebildet sind. Die Lagerbohrungen nehmen vorzugsweise Planetenzapfen der zweiten Planetenräder auf. Über die Planetenzapfen sind die zweiten Planetenräder in den Lagerbohrungen drehbar gelagert. Indem die Lagerbohrungen als Sacklochbohrungen ausgebildet sind, sind die zweiten Planetenräder somit nicht nur drehbar gelagert, sondern auch axial gesichert. Damit können außerdem Reibungsverluste innerhalb des Umlaufrädergetriebes verringert werden, wenn die Planetenzapfen der zweiten Planetenräder eine Länge aufweisen, die größer als die Tiefe der Sacklochbohrungen ist. So wird vermieden, dass die zweiten Planetenräder mit ihren Seitenflächen auf dem Planetenradträger bzw. der Trägerscheibe reiben. Vielmehr wird durch die Planetenzapfen, die länger sind als die Sacklochbohrungen, sichergestellt, dass zwischen der Seitenwand der zweiten Planetenräder und dem Planetenradträger bzw. der Trägerscheibe ein Abstand besteht. Reibungsverluste innerhalb des Umlaufrädergetriebes werden so vermieden.

Um ein Verkanten der Planetenräder, insbesondere der zweiten Planetenräder, zu vermeiden, ist in bevorzugten Ausführungsformen der Erfindung vorgesehen, dass der Planetenradträger mit einem Deckring kombinierbar ist. Insbesondere können die Lagerzapfen des Planetenradträgers jeweils einen Stiftfortsatz zur Montage eines solchen Deckrings aufweisen. Der Deckring kann parallel zur Trägerscheibe ausgerichtet sein. Insbesondere ist bevorzugt vorgesehen, dass der Deckring Gegenlagerbohrungen zur Aufnahme der zweiten Planetenräder aufweist. Die Gegenlagerbohrungen können jeweils koaxial zu den Lagerbohrungen des Planetenradträgers ausgerichtet sein.

Durch die Gegenlagerbohrungen im Deckring ist sichergestellt, dass die zweiten Planetenräder zweifach gelagert sind. Ein Verkanten der zweiten Planetenräder wird somit effizient vermieden. Gleichzeitig kann der Deckring die Lagerzapfen stabilisieren, so dass eine Biegebelastung auf die Lagerzapfen und die Planetenzapfen gleichermaßen reduziert wird. Insgesamt werden auf diese Weise die Planetenräder innerhalb des Umlaufrädergetriebes gut geführt.

Die Gegenlagerbohrungen im Deckring und die Lagerbohrungen im Planetenradträger können in bevorzugten Ausführungsformen unterschiedliche Querschnittsdurchmesser aufweisen. Entsprechend kann vorgesehen sein, dass die zweiten Planetenräder jeweils einen Planetenzapfen und einen Gegenzapfen aufweisen, die unterschiedliche Querschnittsdurchmesser aufweisen. Die Querschnittsdurchmesser des Planetenzapfens und der Lagerbohrung sind vorzugsweise aufeinander abgestimmt. Ebenso können die Querschnittsdurchmesser des Gegenzapfens und der Gegenlagerbohrungen aufeinander abgestimmt sein. Durch die unterschiedlichen Querschnittsdurchmesser der Gegenlagerbohrungen und der Lagerbohrungen sowie der Planetenzapfen und der Gegenzapfen ist eine eindeutige Richtungszuordnung bei der Montage der zweiten Planetenräder am Planetenradträger gewährleistet.

Alternativ ist es ebenso denkbar, dass die Gegenlagerbohrungen und die Lagerbohrungen gleiche Durchmesser aufweisen. Damit können Werkzeugkosten eingespart werden.

Die vorliegende Erfindung betrifft außerdem ein Set zur Herstellung von Umlaufrädergetrieben mit unterschiedlichen Untersetzungen. Das Set umfasst vorzugsweise einen zuvor beschriebenen Planetenradträger. Ferner weist das Set zwei erste Planetenräder für eine erste Getriebeuntersetzung und wenigstens zwei zweite Planetenräder für eine zweite Getriebeuntersetzung auf. Die ersten Planetenräder haben vorzugsweise einen anderen Querschnittsdurchmesser oder eine andere Zähnezahl als die zweiten Planetenräder. Die ersten Planetenräder sind mit Spiel drehbar auf die Lagerzapfen des Planetenradträgers aufsteckbar.

Die zweiten Planetenräder weisen jeweils einen Planetenzapfen auf, der zum drehbaren Eingriff in die Lagerbohrungen des Planetenradträgers angepasst ist.

Das erfindungsgemäße Set ermöglicht es auf einfache Weise Umlaufrädergetriebe mit unterschiedlichen Getriebeuntersetzungen zu realisieren. Dabei werden weitgehend identische Bauteile eingesetzt. Lediglich die Planetenräder unterscheiden sich. Wegen der hohen Übereinstimmung an Bauteilen ist es mit dem erfindungsgemäßen Set besonders effizient und kostengünstig möglich, verschiedene Getriebeuntersetzungen zu realisieren.

Bei dem erfindungsgemäßen Set ist in bevorzugten Ausführungsbeispielen vorgesehen, dass die ersten Planetenräder jeweils eine Durchgangsbohrung aufweisen, die mit Spielpassung auf einem Lagerzapfen des Planetenradträgers lagerbar ist.

Die zweiten Planetenräder können jeweils einen Gegenzapfen aufweisen, der mit Spielpassung in einer Gegenlagerbohrung im Deckring lagerbar ist. Insgesamt unterscheiden sich die ersten Planetenräder und die zweiten Planetenräder so durch die Art und Weise der Lagerung am Planetenradträger. Damit wird besonders effizient eine Fehlmontage vermieden.

Ein weiterer Aspekt der Erfindung betrifft ein Umlaufrädergetriebe mit einem zuvor beschriebenen Planetenradträger. Bei dem erfindungsgemäßen Umlaufrädergetriebe kann insbesondere vorgesehen sein, dass der Planetenradträger erste Planetenräder oder zweite Planetenräder aus einem zuvor beschriebenen Set trägt. Dabei können insbesondere die zweiten Planetenräder mit Spielpassung im Deckring gelagert sein. Konkret können die zweiten Planetenräder Gegenzapfen aufweisen, die jeweils mit Spielpassung in Gegenlagerbohrungen des Deckrings eingreifen.

Bei dem erfindungsgemäßen Umlaufrädergetriebe kann ferner vorgesehen sein, dass der Planetenradträger und der Deckring aus gleichen oder unterschiedlichen Materialien gebildet sind. Insbesondere können der Planetenradträger und/oder der Deckring aus Kunststoff oder Metall gebildet sein. Die Verwendung eines Metalls hat Vorteile hinsichtlich der Stabilität des Umlaufrädergetriebes. Demgegenüber weist ein Kunststoffmaterial verbesserte Gleiteigenschaften auf, so dass zwischen den Planetenrädern und dem Planetenradträger bzw. dem Deckring gut gängige Gleitlager gebildet sind.

Die Erfindung wird im Folgenden anhand eines Ausführungsbeispiels unter Bezugnahme auf die beigefügten, schematischen Zeichnungen näher erläutert.
Darin zeigen
- Fig. 1: eine Querschnittsansicht durch einen Teil eines erfindungsgemäßen Umlaufrädergetriebes, wobei zur Veranschaulichung sowohl erste Planetenräder, als auch zweite Planetenräder vorgesehen sind;
- Fig. 2: eine Explosionsansicht des Teils eines Umlaufrädergetriebes gemäß Fig. 1 mit einem Satz erster Planetenräder; und
- Fig. 3: eine Explosionsansicht des Teils eines Umlaufrädergetriebes gemäß Fig. 1 mit einem Satz zweiter Planetenräder.

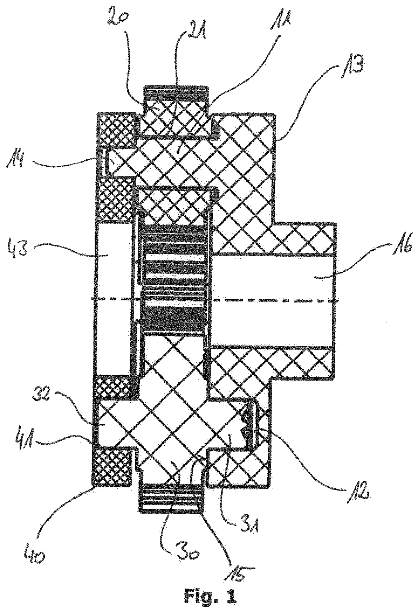

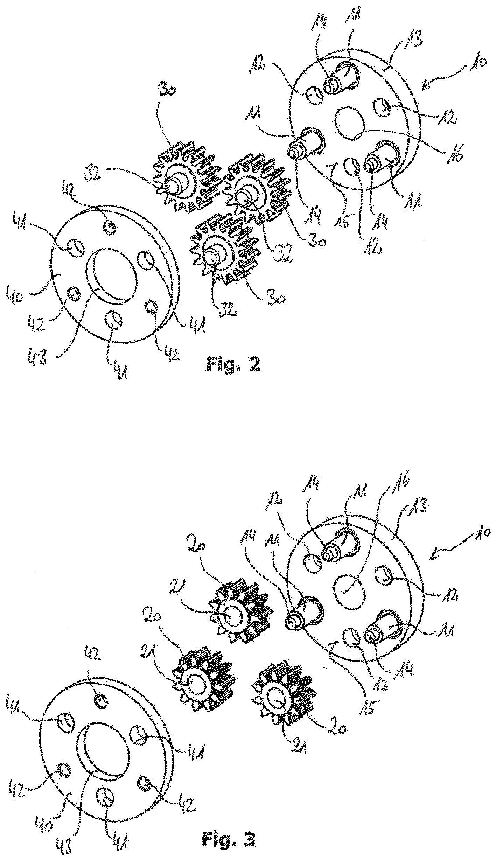

In Fig. 1 ist ein Planetenradträger 10 zu sehen, der eine Trägerscheibe 13 bildet. Auf einer Stirnseite 15 der Trägerscheibe 13 sind Lagerzapfen 11 angeordnet. Die Lagerzapfen 11 sind einstückig mit der Trägerscheibe 13 ausgebildet. Insgesamt ist vorgesehen, dass der gesamte Planetenradträger 10 einstückig ausgebildet ist. Ferner sind auf der Stirnseite 15 Lagerbohrungen 12 ausgebildet, die als Sacklochbohrungen geformt sind. Wie in den Fig. 2 und 3 erkennbar ist, sind die Lagerbohrungen 12 jeweils zwischen zwei Lagerzapfen 11 angeordnet.

Der Planetenradträger 10 ist mit einem Deckring 40 verbindbar. Der Deckring 40 ist ringförmig ausgebildet und weist mehrere Gegenlagerbohrungen 41 auf. Die Gegenlagerbohrungen 41 können als durchgehende Öffnungen im Deckring 40 ausgebildet sein. Vorzugsweise sind ebenso viele Gegenlagerbohrungen 41 im Deckring 40 wie Lagerbohrungen 12 im Planetenradträger 10 ausgebildet. Ferner weist der Deckring 40 Stiftaufnahmen 42 auf. Die Stiftaufnahmen 42 können ebenfalls als durchgängige Bohrungen im Deckring 40 ausgebildet sein. Vorzugsweise ist dieselbe Anzahl von Stiftaufnahmen 42 wie Lagerzapfen 11 am Planetenradträger 10 vorgesehen.

Zur Verbindung mit dem Deckring 40 weist jeder Lagerzapfen 11 einen Stiftfortsatz 14 auf. Der Stiftfortsatz 14 weist einen kleineren Querschnittsdurchmesser als der Lagerzapfen 11 auf. Auf diese Weise bildet der Lagerzapfen 11 einen axialen Anschlag für den Deckring 40. Der Stiftfortsatz 14 greift dabei passgenau, vorzugsweise mit Presspassung in die Stiftaufnahme 42 ein, so dass der Deckring 40 fest mit dem Planetenradträger 10 verbunden ist.

Der Deckring 40 weist außerdem eine zentrale Öffnung 43 auf, die koaxial zu einer Wellenaufnahme 16 des Planetenradträgers 10 ausgerichtet ist. Die Wellenaufnahme 16 ermöglicht es, eine Welle eines Sonnenrads des Umlaufrädergetriebes aufzunehmen. Dazu erstreckt sich die Wellenaufnahme 16 zentral durch den Planetenradträger 10 bzw. die Trägerscheibe 13. Die Wellenaufnahme 16 ist dabei rohrförmig ausgebildet und weist eine kreiszylinderförmige Innenkontur auf.

In Fig. 1 ist lediglich zur Veranschaulichung eine Zusammenstellung des Planetenradträgers 10 mit einem Deckring 40 und zwei Sätzen von ersten Planetenrädern 20 und zweiten Planetenrädern 30 dargestellt. Üblicherweise werden der Planetenradträger 10 und der Deckring 40 entweder mit einem Satz erster Planetenräder 20 oder einem Satz zweiter Planetenräder 30 kombiniert.

Konkret sind die ersten Planetenräder 20 mit einer Durchgangsbohrung 21 ausgestattet, die mit Spiel drehbar auf den Lagerzapfen 11 lagerbar ist. Die ersten Planetenräder 20 bilden dabei mit dem Planetenradträger 10 und ggf. dem Deckring 40 einen Teil eines Umlaufrädergetriebes mit einer ersten Getriebeuntersetzung.

Die zweiten Planetenräder 30 weisen hingegen einen Planetenzapfen 31 auf, der der Lagerbohrung 12 des Planetenradträgers 10 zugeordnet ist. Der Planetenzapfen 31 ist insbesondere mit Spiel drehbar in die Lagerbohrung 12 einsetzbar. Koaxial zum Planetenzapfen 31 ist am zweiten Planetenrad 30 ein Gegenzapfen 32 vorgesehen. Der Gegenzapfen 32 ist dem Deckring 40, insbesondere der Gegenlagerbohrung 41 im Deckring 40, zugeordnet. Insbesondere ist der Gegenzapfen 32 in der Gegenlagerbohrung 41 mit Spiel drehbar gelagert.

Der Planetenzapfen 31 und der Gegenzapfen 32 sind vorzugsweise einstückig mit den zweiten Planetenrad 30 ausgebildet. Der Planetenzapfen 31 und der Gegenzapfen 32 bilden auf diese Weise zusammen mit der Lagerbohrung 12 und der Gegenlagerbohrung 41 eine zweifache Lagerung für das zweite Planetenrad 30, wodurch eine stabile Ausrichtung des zweiten Planetenrads 30 im Umlaufrädergetriebe sichergestellt ist. Insbesondere können so Biegebelastungen auf das Umlaufrädergetriebe gut aufgenommen werden.

Fig. 2 zeigt in einer Explosionsdarstellung den Planetenradträger 10 mit Lagerzapfen 11 und Lagerbohrungen 12 sowie den Deckring 40 mit Gegenlagerbohrungen 41 und Stiftaufnahmen 42. Es ist gut erkennbar, dass die Stiftaufnahmen 42 mit den Stiftfortsätzen 14 an den Lagerzapfen 11 des Planetenradträgers 10 fluchten, so dass zwischen dem Deckring 40 und dem Planetenradträger 10 eine Verbindung hergestellt werden kann. Ferner sind in Fig. 2 drei zweite Planetenräder 30 gezeigt, die jeweils einen Gegenzapfen 32 und einen Planetenzapfen 31 aufweisen. Der Gegenzapfen 32 greift bei Montage des Umlaufrädergetriebes in die Gegenlagerbohrungen 41 des Deckrings 40 mit Spiel ein. Ebenso greifen die Planetenzapfen 31 mit Spiel in die Lagerbohrungen 12 des Planetenradträgers 10 ein. Die zweiten Planetenräder 30 sind so drehbar im Planetenradträger 10 und im Deckring 40 gelagert.

Die zweiten Planetenräder 30 weisen vorzugsweise einen Außendurchmesser auf, der kleiner ist als der Abstand zwischen zwei Lagerzapfen 11. So wird vermieden, dass die zweiten Planetenräder 30 mit den Lagerzapfen 11 kollidieren.

In Fig. 3 ist ebenfalls das Umlaufrädergetriebe gezeigt, das den Planetenradträger 10 und den Deckring 40 aufweist. Der Planetenradträger 10 und der Deckring 40 sind identisch wie in Fig. 2 ausgebildet. Fig. 3 unterscheidet sich von Fig. 2 durch die Art der Planetenräder. Konkret sind in Fig. 3 drei erste Planetenräder 20 gezeigt, die mit den Lagerzapfen 11 des Planetenradträgers 10 kombinierbar sind. Konkret weisen die ersten Planetenräder 20 jeweils eine Durchgangsbohrung 21 auf, die mit Spiel auf die Lagerzapfen 11 aufsteckbar ist. Ebenso ist in Fig. 3 erkennbar, dass die ersten Planetenräder 20 eine andere Zähnezahl als die zweiten Planetenräder 30 aufweisen. Konkret ermöglichen es die ersten Planetenräder 20 so eine andere Getriebeuntersetzung einzustellen als dies mit den zweiten Planetenrädern 30 möglich ist.

Im montierten Zustand sind die ersten Planetenräder 20 drehbar auf den Lagerzapfen 11 gelagert. Der Außendurchmesser der ersten Planetenräder 20 ist dabei so bemessen, dass die Zähne der ersten Planetenräder 20 nicht ineinandergreifen, so dass sich die ersten Planetenräder 20 nicht gegenseitig blockieren. Die Verbindung zwischen den ersten Planetenrädern 20 erfolgt über das hier nicht dargestellte Sonnenrad oder ein hier nicht dargestelltes Hohlrad.

Hinsichtlich der zweiten Planetenräder 30 ist bei den dargestellten Ausführungsbeispielen vorgesehen, dass die Planetenzapfen 31 und die Gegenzapfen 32 identische Querschnittsdurchmesser aufweisen. Es ist allerdings auch möglich, dass die Planetenzapfen 31 und die Gegenzapfen 32 unterschiedliche Querschnittsdurchmesser aufweisen. Entsprechend ist vorgesehen, dass die Gegenlagerbohrung 41 im Deckring 40 und die Lagerbohrung im Planetenradträger 10 unterschiedliche Querschnittsdurchmesser aufweisen. Auf diese Weise kann eine eindeutige Richtungszuordnung der zweiten Planetenräder 30 sichergestellt werden.

In den hier dargestellten Ausführungsbeispielen ist jeweils ein Deckring 40 vorgesehen, der ein Gegenlager für die Lagerzapfen 11 bzw. die zweiten Planetenräder 30 bildet. Es ist allerdings auch möglich, zur Reduktion des Bauraums auf den Deckring 40 zu verzichten. Entsprechend können die zweiten Planetenräder 30 nur mit Planetenzapfen 31, insbesondere ohne Gegenzapfen 32, ausgebildet sein.

### Bezugszeichenliste

- 10: Planetenradträger
- 11: Lagerzapfen
- 12: Lagerbohrung
- 13: Trägerscheibe
- 14: Stiftfortsatz
- 15: Stirnseite
- 16: Wellenaufnahme
- 20: Erstes Planetenrad
- 21: Durchgangsbohrung
- 30: Zweites Planetenrad
- 31: Planetenzapfen
- 32: Gegenzapfen
- 40: Deckring
- 41: Gegenlagerbohrung
- 42: Stiftaufnahme
- 43: Zentrale Öffnung

## Patentansprüche

1. Planetenradträger (10) für ein Umlaufrädergetriebe mit einer Trägerscheibe (13), wenigstens zwei Lagerzapfen (11) und wenigstens zwei Lagerbohrungen (12), wobei die Lagerzapfen (11) mit jeweils einem ersten Planetenrad (20) zur Bildung einer ersten Getriebeuntersetzung und die Lagerbohrungen (12) mit jeweils einem zweiten Planetenrad (30) zur Bildung einer zweiten Getriebeuntersetzung kombinierbar sind, **dadurch gekennzeichnet, dass** die Lagerzapfen (11) mit der Trägerscheibe (13) einstückig ausgebildet sind.

2. Planetenradträger (10) nach Anspruch 1,
**dadurch gekennzeichnet, dass**
die Lagerzapfen (11) und die Lagerbohrungen (12) auf derselben Seite der Trägerscheibe (13) angeordnet sind.

3. Planetenradträger (10) nach Anspruch 1 oder 2,
**dadurch gekennzeichnet, dass**
in Umfangsrichtung der Trägerscheibe (13), jeweils abwechselnd ein Lagerzapfen (11) und eine Lagerbohrung (12) vorgesehen sind.

4. Planetenradträger (10) nach einem der vorhergehenden Ansprüche,
**dadurch gekennzeichnet, dass**
die Lagerzapfen (11) auf einer ersten Kreislinie und die Lagerbohrungen (12) auf einer zweiten Kreislinie angeordnet sind, wobei die erste Kreislinie und die zweite Kreislinie unterschiedliche Kreisdurchmesser aufweisen.

5. Planetenradträger (10) nach einem der vorhergehenden Ansprüche,
**dadurch gekennzeichnet, dass**
die Lagerbohrungen (12) als Sacklochbohrungen ausgebildet sind.

6. Planetenradträger (10) nach einem der vorhergehenden Ansprüche,
**dadurch gekennzeichnet, dass**
die Lagerzapfen (11) jeweils einen Stiftfortsatz (14) zur Montage eines Deckrings (40) aufweisen.

7. Planetenradträger (10) nach Anspruch 6,
**dadurch gekennzeichnet, dass**
der Deckring (40) parallel zur Trägerscheibe (13) ausgerichtet ist.

8. Planetenradträger (10) nach Anspruch 6 oder 7,
**dadurch gekennzeichnet, dass**
der Deckring (40) Gegenlagerbohrungen (41) zur Aufnahme der zweiten Planetenräder (30) aufweist, die jeweils koaxial zu den Lagerbohrungen (12) ausgerichtet sind.

9. Set zur Herstellung von Umlaufrädergetrieben mit unterschiedlichen Untersetzungen, umfassend:
- einen Planetenradträger (10) nach einem der vorhergehenden Ansprüche,
- wenigstens zwei erste Planetenräder (20) für eine erste Getriebeuntersetzung und
- wenigstens zwei zweite Planetenräder (30) für eine zweite Getriebeuntersetzung,
wobei die ersten Planetenräder (20) einen anderen Querschnittsdurchmesser als die zweiten Planetenräder (30) aufweisen und mit Spiel drehbar auf die Lagerzapfen (11) des Planetenradträgers (10) aufsteckbar sind, und wobei die zweiten Planetenräder (30) jeweils einen Planetenzapfen (31) aufweisen, der zum drehbaren Eingriff in die Lagerbohrungen (12) des Planetenradträgers (10) angepasst ist.

10. Set nach Anspruch 9,
**dadurch gekennzeichnet, dass**
die ersten Planetenräder (20) jeweils eine Durchgangsbohrung (21) aufweisen, die mit Spielpassung auf einem Lagerzapfen (11) des Planetenradträgers (10) lagerbar ist.

11. Set nach Anspruch 9 oder 10,
**dadurch gekennzeichnet, dass**
die zweiten Planetenräder (30) jeweils einen Gegenzapfen (32) aufweisen, der mit Spielpassung in einer Gegenlagerbohrung (41) im Deckring (40) lagerbar ist.

12. Umlaufrädergetriebe mit einem Planetenradträger (10) nach einem der Ansprüche 1 bis 8.

13. Umlaufrädergetriebe nach Anspruch 12,
**dadurch gekennzeichnet, dass**
der Planetenradträger (10) erste Planetenräder (20) oder zweite Planetenräder (30) aus einem Set gemäß einem der Ansprüche 9 bis 11 trägt.

14. Umlaufrädergetriebe nach Anspruch 12 oder 13,
**dadurch gekennzeichnet, dass**
die zweiten Planetenräder (30) mit Spielpassung im Deckring (40) gelagert sind.

15. Umlaufrädergetriebe nach einem der Ansprüche 12 bis 14,
**dadurch gekennzeichnet, dass**
der Planetenradträger (10) und der Deckring (40) aus gleichen oder unterschiedlichen Materialien gebildet sind.

## Claims

1. A planet carrier (10) for a planetary gear train with a carrier disc (13), at least two bearing journals (11) and at least two bearing bores (12), wherein the bearing journals (11) can be combined with in each case a first planet wheel (20) to form a first gear reduction ratio, and the bearing bores (12) with in each case a second planet wheel (30) to form a second gear reduction ratio, **characterised in that** the bearing journals (11) are formed in one piece with the carrier disc (13).

2. A planet carrier (10) according to Claim 1,
**characterised in that**
the bearing journals (11) and the bearing bores (12) are arranged on the same side of the carrier disc (13).

3. A planet carrier (10) according to Claim 1 or 2,
**characterised in that**
in the circumferential direction of the carrier disc (13), a bearing journal (11) and a bearing bore (12) are provided in each case in alternation.

4. A planet carrier (10) according to one of the preceding claims,
**characterised in that**
the bearing journals (11) are arranged on a first circular line and the bearing bores (12) on a second circular line, the first circular line and the second circular line having different circle diameters.

5. A planet carrier (10) according to one of the preceding claims,
**characterised in that**
the bearing bores (12) are formed as blind hole bores.

6. A planet carrier (10) according to one of the preceding claims,
**characterised in that**
the bearing journals (11) in each case have a pin extension (14) for mounting a covering ring (40).

7. A planet carrier (10) according to Claim 6,
**characterised in that**
the covering ring (40) is oriented parallel to the carrier disc (13).

8. A planet carrier (10) according to Claim 6 or 7,
**characterised in that**
the covering ring (40) has counter-bearing bores (41) for receiving the second planet wheels (30), which in each case are oriented coaxially with the bearing bores (12).

9. A set for producing planetary gear trains with different reduction ratios, comprising:
- a planet carrier (10) according to one of the preceding claims,
- at least two first planet wheels (20) for a first gear reduction ratio, and
- at least two second planet wheels (30) for a second gear reduction ratio,
wherein the first planet wheels (20) have a different cross-sectional diameter from the second planet wheels (30) and can be mounted with play rotatably on the bearing journals (11) of the planet carrier (10), and wherein the second planet wheels (30) in each case have a planet journal (31) which is adapted to engage rotatably in the bearing bores (12) of the planet carrier (10).

10. A set according to Claim 9,
**characterised in that**
the first planet wheels (20) in each case have a through bore (21) which can be mounted with a clearance fit on a bearing journal (11) of the planet carrier (10).

11. A set according to Claim 9 or 10,
**characterised in that**
the second planet wheels (30) in each case have a counter-journal (32) which can be mounted with a clearance fit in a counter-bearing bore (41) in the covering ring (40).

12. A planetary gear train with a planet carrier (10) according to one of Claims 1 to 8.

13. A planetary gear train according to Claim 12,
**characterised in that**
the planet carrier (10) bears first planet wheels (20) or second planet wheels (30) from a set according to one of Claims 9 to 11.

14. A planetary gear train according to Claim 12 or 13,
**characterised in that**
the second planet wheels (30) are mounted in the covering ring (40) with a clearance fit.

15. A planetary gear train according to one of Claims 12 to 14,
**characterised in that**
the planet carrier (10) and the covering ring (40) are formed from identical or different materials.

## Revendications

1. Support de pignons satellites (10) pour un engrenage épicycloïdal avec un disque de support (13), au moins deux axes d'appui (11) et au moins deux alésages d'appui (12), où les axes d'appui (11) peuvent être combinés chacun avec un premier pignon satellite (20) pour la formation d'une première réduction d'engrenage et les alésages d'appui (12) peuvent être combinés chacun avec un second pignon satellite (30) pour la formation d'une seconde réduction d'engrenage, **caractérisé en ce que** les axes d'appui (11) sont formés d'une pièce avec le disque de support (13).

2. Support de pignons satellites (10) selon la revendication 1, **caractérisé en ce que** les axes d'appui (11) et les alésages d'appui (12) sont disposés sur le même côté du disque de support (13).

3. Support de pignons satellites (10) selon la revendication 1 ou 2, **caractérisé en ce que**, dans la direction de la circonférence du disque de support (13), tour à tour un axe d'appui (11) et un alésage d'appui (12) sont prévus.

4. Support de pignons satellites (10) selon l'une des revendications précédentes, **caractérisé en ce que** les axes d'appui (11) sont disposés sur un premier cercle et les alésages d'appui (12) sont disposés sur un second cercle, où le premier cercle et le second cercle présentent des diamètres différents.

5. Support de pignons satellites (10) selon l'une des revendications précédentes, **caractérisé en ce que** les alésages d'appui (12) sont agencés sous forme d'alésages à trou borgne.

6. Support de pignons satellites (10) selon l'une des revendications précédentes, **caractérisé en ce que** les axes d'appui (11) présentent chacun un prolongement de tige (14) pour le montage d'un anneau de recouvrement (40).

7. Support de pignons satellites (10) selon la revendication 6, **caractérisé en ce que** l'anneau de recouvrement (40) est orienté parallèlement au disque de support (13).

8. Support de pignons satellites (10) selon la revendication 6 ou 7, **caractérisé en ce que** l'anneau de recouvrement (40) présente des contre-alésages d'appui (41) pour la réception des seconds pignons satellites (30), qui sont orientés chacun coaxialement aux alésages d'appui (12).

9. Ensemble pour la production d'engrenages épicycloïdaux avec des réductions différentes, comprenant :
- un support de pignons satellites (10) selon l'une des revendications précédentes,
- au moins deux premiers pignons satellites (20) pour une première réduction d'engrenage et
- au moins deux seconds pignons satellites (30) pour une seconde réduction d'engrenage,
où les premiers pignons satellites (20) présentent un diamètre en section transversale différent des seconds pignons satellites (30) et peuvent être montés de manière rotative avec jeu sur les axes d'appui (11) du support de pignons satellites (10), et où les seconds pignons satellites (30) présentent chacun un axe de satellite (31), qui est adapté pour l'engagement à rotation dans les alésages d'appui (12) du support de pignons satellites (10).

10. Ensemble selon la revendication 9, **caractérisé en ce que** les premiers pignons satellites (20) présentent chacun un alésage traversant (21) qui peut être monté à ajustement avec jeu sur un axe d'appui (11) du support de pignons satellites (10).

11. Ensemble selon la revendication 9 ou 10, **caractérisé en ce que** les seconds pignons satellites (30) présentent chacun un contre-axe (32) qui peut être monté à ajustement avec jeu dans un contre-alésage d'appui (41) dans l'anneau de recouvrement (40).

12. Engrenage épicycloïdal avec un support de pignons satellites (10) selon l'une des revendications 1 à 8.

13. Engrenage épicycloïdal selon la revendication 12, **caractérisé en ce que** le support de pignons satellites (10) porte des premiers pignons satellites (20) ou des seconds pignons satellites (30) d'un ensemble selon l'une des revendications 9 à 11.

14. Engrenage épicycloïdal selon la revendication 12 ou 13, **caractérisé en ce que** les seconds pignons satellites (30) sont montés à ajustement avec jeu dans l'anneau de recouvrement (40).

15. Engrenage épicycloïdal selon l'une des revendications 12 à 14, **caractérisé en ce que** le support de pignons satellites (10) et l'anneau de recouvrement (40) sont formés en les mêmes matériaux ou en matériaux différents.
